# EUROPÄISCHE PATENTSCHRIFT

(11) **EP 2 216 209 B1**
(45) Veröffentlichungstag und Bekanntmachung des Hinweises auf die Patenterteilung: **12.09.2012**
(21) Anmeldenummer: 09175982.9
(22) Anmeldetag: 13.11.2009
(51) Int. Cl.: B60R 21/13

(54) **Überrollschutzsystem für Kraftfahrzeuge**
Rollover protection system for motor vehicles
Système de protection contre les tonneaux pour des véhicules automobiles

(43) Veröffentlichungstag der Anmeldung: 11.08.2010
(73) Patentinhaber: ISE Automotive GmbH, 51702 Bergneustadt (DE)
(72) Erfinder: Nass, Michael, 51702, Bergneustadt (DE); Hellweg, Dr. Hans-Bernd, 53819, Neunkirchen-Seelscheid (DE)
(74) Vertreter: Kalkoff & Partner

(56) Entgegenhaltungen:
- EP-A1- 0 657 326
- DE-A1- 4 426 733
- DE-A1- 19 960 764
- DE-A1-102005 052 232

## Beschreibung

Die Erfindung betrifft ein Überrollschutzsystem für Kraftfahrzeuge, mit
- einem zwischen einer Lagerungsposition und einer Überschlagsposition verstellbaren Überrollkörper und
- einer den Überrollkörper im Bedarfsfall aus der Lagerungsposition in die Überschlagsposition verstellenden Antriebseinheit, die einen mittels eines Gasgenerators entfaltbaren und dabei mit dem Überrollkörper in Wirkverbindung stehenden und diesen in die Überschlagsposition verstellenden Airbag aufweist, wobei die Antriebseinheit derart angeordnet ist, dass der Airbag unmittelbar mit dem Überrollkörper in Eingriff bringbar ist

Überrollschutzsysteme der eingangs genannten Art sind in vielfältigen Ausgestaltungen aus dem Stand der Technik bekannt. Sie dienen bei Kraftfahrzeugen wie Cabriolets oder Roadstern, bei denen das Dach zwischen einer den Innenraum überdeckenden und einer diesen freigebenden Position verstellbar ist, im Falle eines Überschlages zum Schutz der Insassen, wobei die in der Überschlagsposition aufgestellten Überrollkörper den Insassen einen Überlebensraum bereitstellen, wenn das Fahrzeug beim Überschlag auf den Überrollkörpern abrollt.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, werden vermehrt aktive Überrollschutzsysteme eingesetzt. Bei diesen befinden sich die Überrollkörper im Normalzustand in einer zurückgezogenen, von außen nicht sichtbaren Lagerungsposition und werden nur im Bedarfsfall, nämlich bei einem drohenden Überschlag in eine Überschlagsposition verstellt, in der sie in Verbindung mit der Karosserie einen Überlebensraum bereitstellen.

Überrollkörper, bspw. Überrollbügel, die im Normalzustand hinter den Fahrzeugsitzen von außen im Wesentlichen unsichtbar angeordnet sind und sich im Falle eines Überschlags selbsttätig aufstellen, stellen eine bevorzugte Ausführungsform der aktiven Überrollschutzsysteme dar. Zwingende Voraussetzung für die Einsetzbarkeit aller aktiven Systeme ist jedoch, dass die Überrollkörper im Bedarfsfall schnell in die die Insassen schützende Überschlagsposition verlagerbar sind.

In der DE 43 42 400 A1 ist ein weit verbreitetes Prinzip eines aktiven Überrollschutzsystems dargestellt. Dieses weist einen in einem fahrzeugfesten Kassettengehäuse geführten U-förmigen oder aus einem Profilkörper gebildeten Überrollkörper auf, der im Normalzustand gegen die Vorspannkraft einer Antriebsdruckfeder durch eine Haltevorrichtung in einer Lagerungsposition gehalten wird, und im Überschlagsfall sensorgesteuert unter Lösen der Haltevorrichtung durch die Federkraft in die Überschlagsposition gelangt.

Derartige Überrollschutzsysteme, die eine Aufstellung mittels einer Federvorspannung realisieren, machen den Einsatz einer ausgeklügelten Haltevorrichtung zur Arretierung des Überrollkörpers in der Lagerungsposition erforderlich, da die Haltevurrichtung gleichzeitig derart mit einer sensorgesteuerten Entriegelungseinheit gekoppelt werden muss, die eine zuverlässige Auslösung im Falle eines drohenden Überschlags gewährleistet. Die Vorgaben bedingen hohe Entwicklungs- sowie Material- und Herstellungskosten.

Aus der DE 10 2005 052 232 A1 ist ein Überrollschutzsystem nach dem Oberbegriff des Anspruchs 1 bekannt, bei dem ein mittels eines Gasgenerators angetriebener Airbag eine Verstellung des Überrollkörpers in die Übefschlagsposition bewirkt, wobei der Airbag direkt bei dessen Expansion am Überrollkörper anliegt.

Der Erfindung liegt die Aufgabe zugrunde, ein Überrollschutzsystem der eingangs genannten Art bereitzustellen, welches sich einfach und kostengünstig herstellen lässt.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Wesentlich für das erfindungsgemäße Überrollschutzsystem ist, dass die Antriebseinheit, welche im Bedarfsfall, nämlich im Falle eines drohenden Überschlags eine Verstellung des Überrollkörpers aus der Lagerungsposition in die Überschlagsposition bewirkt, einen mittels eines Gasgenerators entfaltbaren Airbag aufweist, wobei dieser beim Entfalten mit dem Überrollkörper in Wirkverbindung steht und diesen in die Überschlagsposition verstellt.

Der sich in Folge des eingeleiteten Gases aus dem Gasgenerator entfaltende bzw. entfaltete Airbag weist gegenüber dem sich in der nicht aktivierten und eingefalteten Position befindlichen Airbag einen deutlich gesteigerten bzw. erhöhten Raumbedarf auf. Diesen Umstand macht sich die Erfindung zunutze, indem die Antriebseinheit derart angeordnet ist, dass der Airbag beim Entfalten den Überrollkörper aus seiner Ruheposition herausdrängen muss, um den erforderlichen Raum einnehmen zu können. Die Wirkrichtung des Airbags beim Entfalten ist dabei dergestalt, dass der Überrollkörper aus der Lagerungsposition in die Überschlagsposition verschoben wird, um ausreichend Raum für den sich entfaltenden Airbag zu schaffen.

Unter einem Airbag wird dabei im Rahmen der Erfindung eine aufblasbare Hülle bzw. ein Luftsack verstanden, der typischerweise aus Gewebestoffen gebildet. Die Hülle bzw. der Luftsack befindet sich im Lagerungszustand des Überrollkörpers in einem zusammengefalteten Zustand. Beim Entfalten gelangt der Airbag mit seiner Außenfläche mit dem Überrollkörper in Wirkeingriff und durch den Entfaltungsvorgang wird der Überrollkörper in die Überschlagsposition verstellt.

Der mit dem Airbag verbundene Gasgenerator eignet sich in besonderem Maße für eine schnelle Verlagerung des Überrollkörpers in die Überschlagsposition, nachdem dieser im Falle eines drohenden Überschlags ein sich schlagartig expandierendes Gas erzeugt. Der Gasgenerator ist dabei derart mit dem Airbag verbunden, dass dieses Gas im Wesentlichen vollständig in das Innere des Airbags, bzw. der Hülle geleitet wird, so dass sich der Airbag schlagartig entfaltet und dadurch eine blitzartige Verstellung des Überrollkörpers bewirkt.

Das erfindungsgemäße Überrollschutzsystem zeichnet sich insbesondere dadurch aus, dass gegenüber den aus dem Stand der Technik bekannten, federvorgespannten Überrollkörpern vollständig auf eine Entriegelungsvorrichtung zur Arretierung der Überrollkörper in der Lagerungsposition sowie auf geeignete Vorspannmittel verzichtet werden kann. Die Erfindung ermöglicht es somit, die zur Herstellung eines aktiven Überrollschutzsystems erforderlichen Bauteile in erheblicher Anzahl zu reduzieren, was eine besonders kostengünstige Herstellung eines zudem leichgewichtigen aktiven Überrollschutzsystems ermöglicht.

Die Übertragung der Bewegungsenergie des sich entfaltenden Airbags auf den Überrollkörper erfolgt dadurch, dass die Antriebseinheit derart angeordnet ist, dass der Airbag unmittelbar mit dem Überrollkörper in Eingriff bringbar ist. Dies ermöglicht eine besonders kostengünstig Herstellung des Überrollschutzsystems, da auf zusätzliche Kopplungsmittel verzichtet werden kann. Die Antriebseinheit ist gemäß der Erfindung dabei derart angeordnet, dass der Airbag, sofern er nicht bereits in der Ruhelage an dem Überrollkörper anliegt, während des Entfaltungsvorganges in direktem Kontakt mit dem Überrollkörper steht und den Überrollkörper dabei aus der Lagerungsposition in die Überrollposition verschiebt. Es ist dabei nicht zwingend erforderlich, dass der Airbag über den gesamten Verstellweg des Überrollkörpers zwischen der Lagerungsposition und der Überrollposition an dem Überrollkörper anliegt. So kann der Einfluss des sich entfaltenden Airbags bzw. entfalteten Airbags auch bereits vor erreichen der Überschlagsposition enden, wenn gewährleistet ist, dass der Überrollltörper derart beschleunigt ist, dass er zuverlässig in die Überschlagsposition gelangt.

Kennzeichnend für die Erfindung ist, dass die Antriebseinheit innerhalb eines den Überrollltörper längsverschieblich lagernden Führungslenals angeordnet

Zur Festlegung der Bewegung des Überrollkörpers dient in der Regel eine Führungseinheit, die neben der Festlegung der Bewegungsrichtung des Überrollkörpers vorzugsweise auch zur Festlegung der Endposition, nämlich der Lagerungsposition und der Überschlagsposition dient. Zur Führung der Überrollkörper können dabei verschiedene Lagerungselemente verwendet werden. Im Falle der Verwendung eines Führungskanals, welcher vorzugsweise an die Geometrie des Überrollkörpers angepasst ist, kann gemäß der Erfindung die Antriebseinheit innerhalb dieses Führungskanals angeordnet werden.

Der Führungskanal bietet gemäß der Erfindung einen Hohlraum, innerhalb dessen sich der Airbag entfalten kann und dabei den Überrollkörper verstellt. Der Führungskanal gewährleistet dabei aufgrund der durch diesen bereitgestellten Abgrenzung in besonderem Maße besonders wirkungsvoll, dass sich der Airbag zuverlässig in Richtung auf den Überrollkörper entfaltet und diesen dabei verstellt. Gleichzeitig verhindert die Anordnung der Antriebseinheit in dem Führungskanal, dass der Airbag innerhalb des Überrollschutzsystems in eine die Funktion des Systems blockierende oder störende Stellung gelangt. Der Einfluss des Airbags ist auf den Überrollkörper beschränkt.

Die Funktionsweise des Airbags ist bereits dann gewährleistet, wenn dieser mit seiner Hülle an einer Außenfläche des Überrollkörpers anliegt, die zur Übertragung der Bewegungsenergie des Airbags auf den Überrollkörper geeignet ist. Nach einer vorteilhaften Ausgestaltung der Erfindung ist jedoch vorgesehen, dass der Überrollkörper im Kontaktbereich mit dem Airbag einen durch einen Anschlag abgegrenzten Hohlraum aufweist, in dem der Airbag zumindest abschnittsweise angeordnet ist. Diese Ausgestaltung der Erfindung, wonach der Hohlraum insbesondere eine Aufnahme für einen dem Gasgenerator abgewandten Bereich des Airbags bietet, gewährleistet in ergänzendem Maße, dass der Airbag während des Entfaltungsvorgangs nicht mit Überrollkörper außer Eingriff gelangt. Darüber hinaus dient der Hohlraum, bzw. die Aufnahme zur Stabilisierung des Airbags. Die Übertragung der Bewegungsenergie des Airbags beim Entfalten auf den Überrollkörper erfolgt dabei über den den Hohlraum abgrenzenden Anschlag, welcher besonders vorteilhafterweise an den entsprechenden Kontaktbereich des Airbags angepasst ausgebildet sein kann. Der Anschlag dient dabei zur formschlüssigen Übertragung der Bewegungsenergie des sich entfaltenden Airbags auf den Überrollkörper.

Die Ausgestaltung des Airbags, insbesondere dessen Form ist grundsätzlich frei wählbar, wobei auch standardisierte, aus anderen Fahrzeugbereichen bekannte Airbagsysteme einsetzbar sind. Nach einer weiteren Ausgestaltung der Erfindung sind der Querschnitt des Airbags in Entfaltungsrichtung und der Querschnitt des Hohlraumes in Längsachsenrichtung jedoch korrespondierend ausgebildet.

Durch diese Ausgestaltung der Erfindung wird, bei einer Anordnung der Antriebseinheit in dem Hohlraum, erreicht, dass sich der Airbag während des Entfaltungsvorgangs überwiegend in Richtung des Überrollkörpers entfaltet, und dabei nahezu seine gesamte Bewegungsenergie auf diesen überträgt. Dies ermöglicht es, den Airbag bzw. die Antriebseinheit besonders klein auszubilden, so dass das Überrollschutzsystem dadurch besonders kostengünstig und in ergänzendem Maße gegenüber den aus dem Stand der Technik bekannten Überrollschutzsystemen gewichtsreduziert ausgestaltet sein kann.

Eine mögliche Ausgestaltung des Airbags gemäß dieser Weiterbildung der Erfindung ist die Verwendung eines schlauchartigen, im entfalteten Zustand im Querschnitt kreisförmigen Airbags, welcher in einem korrespondierend kreisförmigen Hohlraum angeordnet ist. Alternative Ausgestaltungen der konstruktiven Form der Airbags im entfalteten Zustand sind aufgrund der im Wesentlichen freien Gestaltungsmöglichkeiten von Airbags ohne Weiteres möglich. So sind auch im Querschnitt polygonale, bspw. rechteckige Airbagstrukturen denkbar, die in korrespondierend ausgebildeten Hohlräumen angeordnet und darüber hinaus mit im Querschnitt ebenfalls entsprechend ausgebildeten Überrollkörpern zusammenwirken.

Besonders vorteilhafterweise ist der Airbag dabei in der gefalteten Position faltenbalgartig zusammengelegt, was im Ruhezustand einen besonders kleinen Bauraum bedingt und darüber hinaus eine besonders schnelle Entfaltung und damit umgehende Verstellung des Überrollkörpers in die Überschlagsposition zur Folge hat.

Wesentlich für die Funktionsweise von aktiven Überrollschutzsystemen ist eine Arretierung des Überrollkörpers in der Überschlagsposition zumindest für die Dauer der auftretenden Belastungen, nämlich die Dauer des Überschlages. Aus dem Stand der Technik sind hier vielfältige Ausgestaltungen von Verriegelungseinheiten bekannt, welche den Überrollkörper in der Überschlagsposition arretieren.

Grundsätzlich besteht auch für das erfindungsgemäße Überrollschutzsystem die Möglichkeit der Verwendung derartiger Verriegelungseinheiten. Nach einer vorteilhaften Weiterbildung der Erfindung sind der Airbag und/oder die Antriebseinheit jedoch derart ausgebildet, dass der Überrollkörper im Zusammenwirken mit dem Airbag in der Überschlagsposition arretiert ist. Gemäß dieser Ausgestaltung der Erfindung kann auf eine separate Verriegelungsvorrichtung verzichtet werden. Eine Arretierung erfolgt dabei über den Airbag und/oder die Antriebseinheit, die mit dem Überrollkörper in Wirkverbindung stehen. So besteht die Möglichkeit, den Gasdruck im Inneren des in der Überschlagsposition mit dem Überrollkörper in Eingriff befindlichen Airbags über die Antriebseinheit dauerhaft aufrechtzuerhalten, wodurch eine Rückverschiebung des Überrollkörpers in Richtung auf die Lagerungsposition verhindert ist. Möglich ist auch der Einsatz von einer in den Airbag oder in die Airbaghülle integrierten Gerüststruktur, welche sich mit dem Airbag aufstellt und im entfalteten Zustand ein Zusammenschieben des Airbags verhindert.

Nach einer weiteren Ausgestaltung der Erfindung ist die Antriebseinheit lösbar mit dem Überrollschutzsystem verbunden. Besonders vorteilhafterweise ist die Antriebseinheit lösbar mit dem Führungskanal verbunden. Diese Ausgestaltung der Erfindung ermöglicht nach einer Auslösung des Überrollkörpers, die nicht zu einer Beanspruchung des Überrollschutzsystems geführt hat, einen einfachen Austausch des Antriebssystems, wodurch das Überrollschutzsystem wieder voll funktionsfähig ist. Besonders vorteilhafterweise ist dabei die Antriebseinheit im Falle der Anordnung in dem Führungskanal in diesen einschraubbar.

Ein Ausführungsbeispiel der Erfindung wird nachstehend mit Bezug auf die Zeichnungen näher erläutert. In den Zeichnungen zeigen:
- Fig. 1: eine Ansicht eines Schnittes eines Überrollschutzsystems mit einer einen Airbag aufweisenden Antriebseinheit in einer Lagerungsposition;
- Fig. 1a: eine Ansicht eines Schnittes durch die Antriebseinheit von Fig. 1 in der Lagerungsposition;
- Fig. 2: eine Ansicht eines Schnittes des Überrollschutzsystems von Fig. 1 mit einem in einer Überschlagsposition befindlichen Überrollkörper und
- Fig. 2a: eine Ansicht der Antriebseinheit von Fig. 1 in einer entfalteten Position des Airbags.

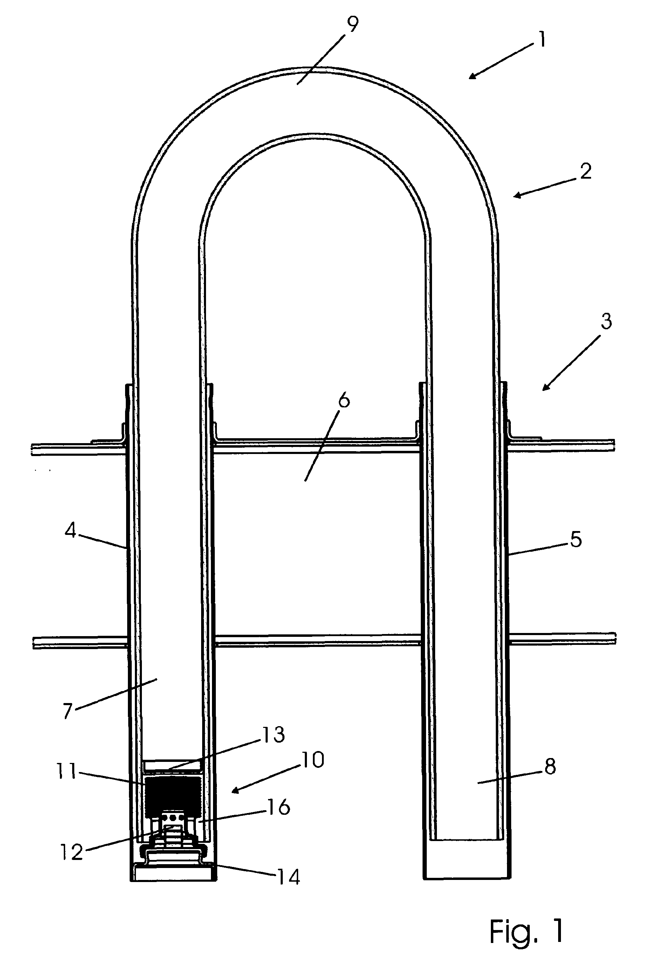

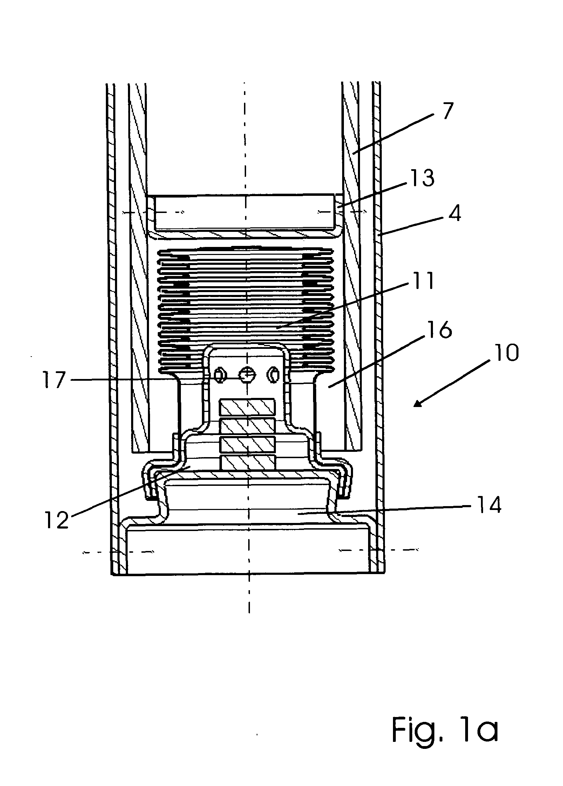

Fig. 1 zeigt in einer Schnittansicht ein Überrollschutzsystem 1 mit einem in einer Lagerungsposition angeordneten, als Überrollbügel 2 ausgebildeten Überrollkörper. Der Überrollbügel 2 weist einen bogenförmigen Rohrabschnitt 9 auf, an dessen Enden sich jeweils ein Schenkelrohr 7,8 anschließt. Neben der Verwendung von kreisförmigen Querschnitten für die Schenkelrohre 7, 8 und dem bogenförmigen Rohrabschnitt 9, können diese auch einen hier nicht dargestellten, ovalen oder polygonalen Querschnitt aufweisen.

Der Überrollbügel 2 ist über die Schenkelrohre 7, 8 in Führungskanälen 4, 5 einer Führungseinheit 3 verschiebbar gelagert. Die Führungskanäle 4, 5 sind dabei ihrerseits starr mit einem Gehäusekasten 6 verbunden, mittels dem das Überrollschutzsystem 1 karosserieseitig über hier nicht dargestellte Befestigungselemente wie Befestigungsschrauben verankert werden kann.

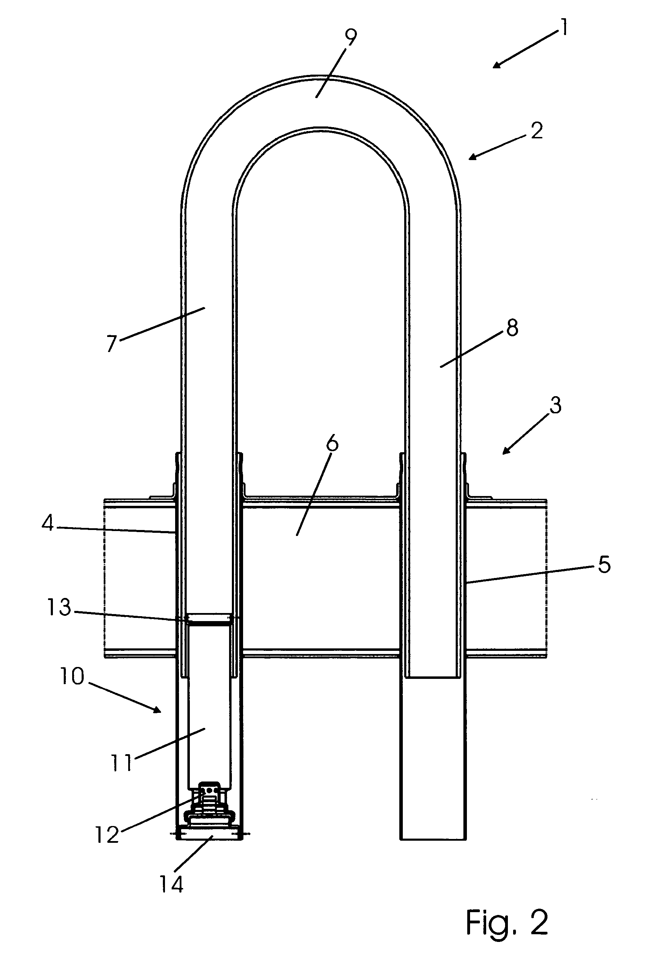

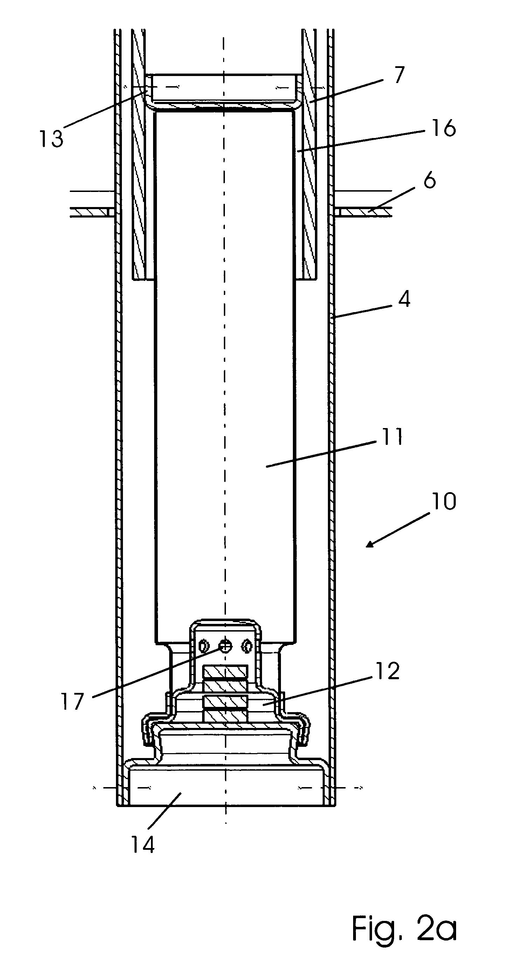

Im Bereich des freien Endes des Schenkelrohres 7 ist eine Antriebseinheit 10 zur Verstellung des Überrollbügels 2 aus der in Fig. 1 dargestellten Lagerungsposition in die in Fig. 2 dargestellte Überschlagsposition an dem Führungskanal 4 angeordnet. Hierzu weist die Antriebseinheit 10 einen im Wesentlichen gasdicht mit einem Gasgenerator 12 verbundenen Airbag 11 auf. Die Antriebseinheit 10 ist dabei ferner derart im Inneren des Führungskanals 4 fixiert, dass der zusammengefaltete Airbag 11 innerhalb des Führungskanals 4 sowie innerhalb eines Hohlraums 16 am freien Ende des Schenkelrohres 7 angeordnet ist (vgl. Fig. 1a). Der Hohlraum 16 wird dabei durch einen innerhalb des offenen Endes des Schenkelrohres 7 angeordneten Anschlag 13 begrenzt.

Zur Verstellung des Überrollbügels 2 in die in Fig. 2 dargestellte Überschlagsposition wird sensorgesteuert der Gasgenerator 12 aktiviert, wodurch aus dem Inneren des Gasgenerators 12 über Austrittsöffnungen 17 das sich bildende Gas in das Innere des Airbags 11 gelangt. Das sich expandierende Gas bewirkt dabei ein schlagartiges Entfalten des faltenbalgartig zusammengelegten Airbags 11 bis in die in Fig. 2a dargestellte vollständig entfaltete Position.

Der sich ausdehnende Airbag 11 verschiebt dabei aufgrund seiner Anlage an dem Anschlag 13 den Überrollbügel 2 über das Schenkelrohr 7 innerhalb des Führungskanals 4 in die in Fig. 2 dargestellte Überschlagsposition des Überrollbügels 2. Aufgrund der symmetrischen Ausbildung des Überrollbügels 2 wird das Schenkelrohr 8 entsprechend in dem Führungskanal 5 verstellt.

Nach erfolgter Auslösung der Antriebseinheit 10 mit dem sich entfalteten Airbag 11, wie in Fig. 2a dargestellt, kann die Antriebseinheit 10 anschließend, falls es nicht zu einer Belastung des Überrollschutzsystems 1 gekommen ist, in einfacher Weise ausgetauscht werden, um das Überrollschutzsystem 1 wieder nutzbar zu machen. Hierzu wird die Schraubverbindung - hier nicht dargestellt - eines Sockels 14 der Antriebseinheit 10 mit dem Führungskanal 4 gelöst und die Antriebseinheit 10 durch eine nicht ausgelöste Antriebseinheit 10 ausgetauscht.

## Patentansprüche

1. Überrollschutzsystem für Kraftfahrzeuge, mit
- einem zwischen einer Lagerungsposition und einer Überschlagsposition verstellbaren Überrollkörper (2) und
- einer den Überrollkörper (2) im Bedarfsfall aus der Lagerungsposition in die Überschlagsposition verstellenden Antriebseinheit (10), die einen mittels eines Gasgenerators (12) entfaltbaren und dabei mit dem Überrollkörper (2) in Wirkverbindung stehenden und diesen in die Überschlagsposition verstellenden Airbag (11) aufweist, wobei die Antriebseinheit (10) derart angeordnet ist, dass der Airbag (11) unmittelbar mit dem Überrollkörpers (2) in Eingriff bringbar ist,
**dadurch gekennzeichnet, dass** die Antnebseinheit (10) innerhalb eines den Überrollkörper (2) längsverschieblich lagernden Führungskanals (4) angeordnet ist.

2. Überrollschutzsystem nach Anspruch 1, **dadurch gekennzeichnet, dass** der Überrollkörper (2) im Eingriffsbereich des Airbags (11) einen durch einen Anschlag (13) abgegrenzten Hohlraum (16) aufweist, in dem der Airbag (11) zumindest abschnittweise angeordnet ist.

3. Überrollschutzsystem nach Anspruch 1 oder 2, **dadurch gekennzeichnet, dass** der Querschnitt des Airbags (11) in Entfaltungsrichtung und der Querschnitt des Hohlraumes (16) in Längsachsenrichtung korrespondierend ausgebildet sind.

4. Überrollschutzsystem nach einem der vorhergehenden Ansprüche, **dadurch gekennzeichnet, dass** der entfaltete Airbag (11) schlauchartig ausgebildet und in seiner gefalteten Position faltenbalgartig zusammengelegt ist

5. Überrollschutzsystem nach einem der vorhergehenden Ansprüche, **dadurch gekennzeichnet, dass** der Airbag (11) und/oder die Antriebseinheit (10) derart ausgebildet ist, dass der Überrollkörper (2) in der Überschlagsposition arretiert ist.

6. Überrollschutzsystem nach einem der vorhergehenden Ansprüche, **dadurch gekennzeichnet, dass** die Antriebseinheit (10) lösbar verbunden ist, insbesondere dass die Antriebseinheit (10) lösbar mit dem Führungskanal (4) verbunden ist.

7. Überrollschutzsystem nach einem der vorhergehenden Ansprüche, **dadurch gekennzeichnet, dass** die Antriebseinheit (10) in den Führungskanal (4) einschraubbar ist.

## Claims

1. A rollover protection system for motor vehicles, with
- a rollover body (2) movable between a storage position and a rollover position and
- a drive unit (10) moving the rollover body (2) if required from the storage position into the rollover position, that has an airbag (11) that can be unfolded by means of a gas generator (12), and in the process is in operative engagement with the rollover body (2) and moves it into the rollover position, wherein the drive unit (10) is disposed such that the airbag (11) can be brought into direct engagement with the rollover body (2),
**characterized in that** the drive unit (10) is disposed within a guide channel (4) bearing the rollover body (2) in a longitudinally movable manner.

2. The rollover protection system according to claim 1, **characterized in that** the rollover body (2) in the region of engagement of the airbag (11) has a cavity (16), bounded by a stop (13), in which the airbag (11) is disposed at least in sections.

3. The rollover protection system according to claim 1 or 2, **characterized in that** the cross-section of the airbag (11) in the direction of unfolding and the cross-section of the cavity (16) are designed correspondingly in the direction of the longitudinal axis.

4. The rollover protection system according to one of the preceding claims, **characterized in that** the unfolded airbag (11) has a hose-like design and is folded in a bellows-like manner in the folded position thereof.

5. The rollover protection system according to one of the preceding claims, **characterized in that** the airbag (11) and/or the drive unit (10) are designed such that the rollover body (2) is locked in the rollover position.

6. The rollover protection system according to one of the preceding claims, **characterized in that** the drive unit (10) is detachably connected, particularly that the drive unit (10) is detachably connected to the guide channel (4).

7. The rollover protection system according to one of the preceding claims, **characterized in that** the drive unit (10) can be screwed into the guide channel (4).

## Revendications

1. Système de protection contre les tonneaux pour des véhicules automobiles, comprenant
- un corps de protection contre les tonneaux (2) réglable entre une position de rangement et une position de retournement,
- une unité d'entraînement (10) qui déplace si nécessaire le corps de protection contre les tonneaux (2) de la position de rangement à la position de retournement, cette unité d'entraînement comprenant un airbag (11) dépliable au moyen d'un générateur à gaz (12) et qui est en liaison active avec le corps de protection contre les tonneaux (2) et déplace celui-ci dans la position de retournement, l'unité d'entraînement (10) étant agencée de telle sorte que l'airbag (11) peut être amené en prise directe avec le corps de protection contre les tonneaux (2),
**caractérisé en ce que** l'unité d'entraînement (10) est située à l'intérieur d'un canal de guidage (4) qui abrite selon un mouvement coulissant longitudinal le corps de protection contre les tonneaux (2).

2. Système de protection contre les tonneaux selon la revendication 1, **caractérisé en ce que** le corps de protection contre les tonneaux (2) présente dans la zone de prise de l'airbag (11) une cavité (16) délimitée par une butée (13), dans laquelle l'airbag (11) est agencée au moins partiellement.

3. Système de protection contre les tonneaux selon la revendication 1 ou 2, **caractérisé en ce que** la section transversale de l'airbag (11) dans la direction de dépliage et la section transversale de la cavité (16) dans la direction axiale longitudinale sont configurées de manière correspondante.

4. Système de protection contre les tonneaux selon une des revendications précédentes, **caractérisé en ce que** l'airbag déplié (11) se présente sous la forme d'un tuyau et est assemblé dans sa position pliée à la manière d'un soufflet.

5. Système de protection contre les tonneaux selon une des revendications précédentes, **caractérisé en ce que** l'airbag (11) et/ou l'unité d'entraînement (10) est configuré(e) de telle sorte que le corps de protection contre les tonneaux (2) est bloqué dans la position de retournement.

6. Système de protection contre les tonneaux selon une des revendications précédentes, **caractérisé en ce que** l'unité d'entraînement (10) est reliée de façon démontable, en particulier **en ce que** l'unité d'entraînement (10) est reliée de façon démontable au canal de guidage (4).

7. Système de protection contre les tonneaux selon une des revendications précédentes, **caractérisé en ce que** l'unité d'entraînement (10) peut être vissée dans le canal de guidage (4).
